# EUROPÄISCHE PATENTSCHRIFT

(11) **EP 1 034 470 B1**
(45) Veröffentlichungstag und Bekanntmachung des Hinweises auf die Patenterteilung: **17.10.2001**
(21) Anmeldenummer: 98965697.0
(22) Anmeldetag: 24.11.1998
(51) Int. Cl.: G06F 3/033

(54) **VORRICHTUNG ZUR STEUERUNG EINER BILDSCHIRMANZEIGE**
DEVICE FOR CONTROLLING A DISPLAY SCREEN
DISPOSITIF POUR COMMANDER UN ECRAN D'AFFICHAGE

(30) Priorität: 25.11.1997 DE 19752056; 22.09.1998 DE 19843421
(43) Veröffentlichungstag der Anmeldung: 13.09.2000
(73) Patentinhaber: Bayerische Motoren Werke Aktiengesellschaft, 80788 München (DE)
(72) Erfinder: KUENZNER, Hermann, D-85356 Freising (DE); HERRLER, Michael, D-80796 München (DE); MAUCLAIR, Isabelle, D-85368 Moosburg (DE)
(86) Internationale Anmeldenummer: EP9807571
(87) Internationale Veröffentlichungsnummer: WO9927435

(56) Entgegenhaltungen:
- EP-A- 0 366 132
- EP-A- 0 498 082
- EP-A- 0 623 870
- EP-A- 0 796 766
- WO-A-96/30822
- US-A- 4 794 388
- US-A- 5 297 253
- PATENT ABSTRACTS OF JAPAN vol. 097, no. 009, 30. September 1997 & JP 09 114902 A (HITACHI LTD;HITACHI SEIBU SOFTWARE LTD), 2. Mai 1997
- "ALGORITHM FOR DECREASING THE ERROR RATE OF DATA ENTERED ON A TOUCH-SENSITIVE TERMINAL" IBM TECHNICAL DISCLOSURE BULLETIN, Bd. 33, Nr. 10A, 1. März 1991, Seiten 223-227, XP000110024

## Beschreibung

Die Erfindung bezieht sich auf eine Vorrichtung mit den Merkmalen des Oberbegriffs von Patentanspruch 1.

Eine derartige Vorrichtung ist aus der EP 0 796 766 A2 bekannt. Dabei dient das Betätigungsglied dazu, die Anzahl der Ebenen innerhalb der Menüstruktur zu vergrößern. Hierzu ist angegeben, die Ebenen über den Umfang der Bildschirmanzeige verteilt anzuordnen. Eine derartige Vorrichtung bedeutet für den Benutzer eine zusätzliche Schwierigkeit. da er keine eindeutige Zuordnung zwischen der Zusatzbewegung und der Axiai- bzw. Rotationsbewegung des Betätigungsglieds vorfindet. Auch gestaltet sich der Übergang zwischen den Ebenen und innerhalb der Menüstruktur für ihn nicht eindeutig und führt letztendlich zu einer erheblichen Ablenkung des Benutzers vom Verkehrsgeschehen.

Der Erfindung liegt die Aufgabe zugrunde, eine Vorrichtung der eingangs genannten Art zu schaffen, bei der eine eindeutige Zuordnung zwischen der Bildschirmanzeige und den verschiedenen Bewegungsmöglichkeiten des Betätigungsglieds besteht.

Die Erfindung löst diese Aufgabe durch die Merkmale des Patentanspruchs 1.

Nunmehr wird durch die Zusatzbewegung des Betätigungsglieds ein übergeordneter Punkt der Menüstruktur durch die Dreh- bzw. Längsbewegung des Betätigungsglieds ein demgegenüber untergeordneter Punkt der Menüstruktur ausgewählt. Konkret bedeutet dies beispielsweise, daß im Randbereich die möglichen Menüs angeordnet sind. während sich im Mittelbereich die zugehörigen Untermenüs bzw. Funktionen oder Funktionswerte befinden. Dabei sind im Mittelbereich nur die Teilmenüs, die Funktion bzw. Funktionswerte angeordnet, die zu dem einen, vorzugsweise durch eine vorhergehende Zusatzbewegung des Betätigungsglieds ausgewählten Menü gehören. Im Randbereich befinden sich somit die innerhalb der Menüstruktur auf gleicher Stufe stehenden Punkte, während im Mittelbereich die hierarchisch niedrigeren Punkte zu finden sind.

Wie an sich aus der EP 0 796 766 A bekannt ist, kann das Betätigungsglied sowohl eine Taumelbewegung als auch eine Parallelverschiebung als Zusatzbewegung durchführen und dabei auch zwangsgeführt sein. Diese Bewegungsmöglichkeiten bzw. -einschränkungen verbessern den Umgang mit und die Bewegung innerhalb der Menüstruktur. Ausgehend von der Mittellage als Ausgangslage des Betätigungsglieds ist die Zusatzbewegung gleichbedeutend mit einem Verlassen der durch die im Mittelbereich angegebenen Ebene der Menüstruktur und das Aussuchen der nächsthöheren Ebene. Die Zurückbewegung in die Ausgangslage bedeutet wiederum den Übergang von der soeben aufgesuchten höheren Ebene in die darunter liegende nächste Ebene. Der Benutzer erhält damit taktil ein Gefühl dafür vermittelt, in welcher Weise er sich innerhalb der Menüstruktur bewegt.

Eine Verbesserung der Erfindung beschäftigt sich mit dem Problem der Fehlbedienung, die bei einer derartigen Vorrichtung auftreten kann. Besonders dann, wenn eine Vielzahl von Punkten im Rahmenbereich der Bildschirmanzeige angeordnet ist, ist die Gefahr besonders groß, versehentlich nicht den gewünschten Punkt zu "treffen". Hinzu kommt die besondere Situation, in der die Auswahl dieser Punkte erfolgt. Häufig erfolgt die Hinwendung zur Bildschirmanzeige in Konkurrenz zum Verkehrsgeschehen. Die dafür zur Verfügung stehende Zeit ist i.d.R. knapp bemessen.

Werden die im Rahmenbereich angeordneten Punkte bei und/oder nach der Zusatzbewegung optisch hergehoben und erst dann ausgewählt, wenn das Betätigungsglied sich zumindest annähernd wieder in der Ausgangslage befindet, wird die Gefahr einer Fehlauswahl weitgehend vermieden.

Mit Hilfe der Zusatzbewegung ist es zwar möglich, den im Rahmenbereich angeordneten Punkt der Menüstruktur optisch auszuwählen. Funktionell erfolgt die Auswahl jedoch erst dann, wenn das Betätigungsglied sich wieder in der Ausgangslage befindet. Unter funktioneller Auswahl ist dabei bei Einsatz der Vorrichtung in einem Fahrzeug zur Steuerung verschiedener Menüs, wie Navigationssystem, Bordcomputer, Klimaanlage usw, und der Zuordnung der im Rahmenbereich angeordneten Punkte zu den einzelnen Menüs folgendes zu verstehen:

Durch die Zusatzbewegung des Betätigungsglieds wird der dem jeweiligen Menü zugeordnete Abschnitt des Randbereichs optisch hervorgehoben, beispielsweise gehighlightet. Die Auswahl und damit Ansteuerung des jeweiligen Menüs, z. B. der Navigation erfolgt jedoch erst dann, wenn nach der optischen Hervorhebung des entsprechenden Randbereichabschnitts das Betätigungsglied wieder in die Ausgangslage zurückgeführt wird. Erst dann wird das Navigationssystem anstelle des vorher auf den Bildschirm dargestellten Menüs, beispielsweise für den Bordcomputer, ausgewählt. Werden dabei die Teilmenüs und/oder Funktionen und/oder Funktionswerte innerhalb der vom Rahmenbereich umgebenen Innenfläche der Bildschirmanzeige als Punkte (z. B. in Form von rechteckigen Feldern) dargestellt, können nun diese Punkte vorzugsweise mit Hilfe des Betätigungsglieds aktiviert werden.

Der Übergang zu einem anderen Menü erfordert wiederum die vorbereitende Auswahl des jeweiligen Randbereichabschnitts mit Hilfe des Betätigungsglieds, verbunden mit der optischen Hervorhebung dieses Ausschnitts und der anschließenden funktionellen Auswahl durch Rückführen des Betätigungsglieds in die Ausgangslage.

Anhand der Zeichnung ist die Erfindung weiter erläutert. Es zeigt
- Fig. 1: eine Bildschirmanzeige, die im Rahmen der erfindungsgemäßen Vorrichtung verwendet wird.
- Fig. 2: die Bildschirmanzeige von Fig. 1 bei Ansteuerung durch ein aus der EP 0 796 766 A bekanntes Betätigungsglied.
- Fig. 3: eine Weiterbildung der Vorrichtung von Fig. 1 und 2 und
- Fig. 4 und 5: die Wirkungsweise der Vorrichtung von Fig.3.

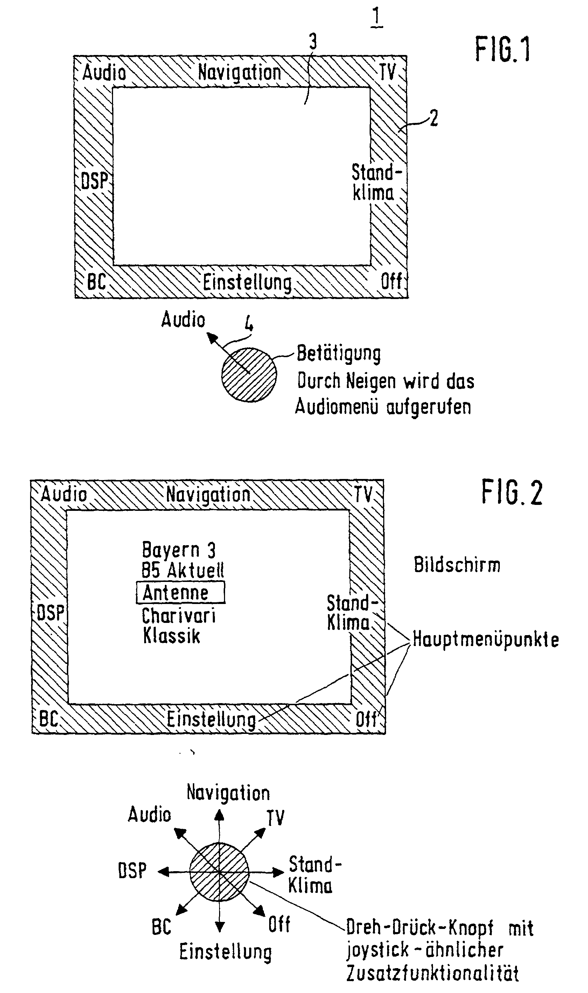

In Fig. 1 ist die im Rahmen der Erfindung vorgesehene Bildschirmanzeige prinzipiell dargestellt. Innerhalb einer Anzeigefläche 1, die gleich der Bildfläche eines Bildschirms ist, befindet sich ein Randbereich 2 und ein Mittelbereich 3. Im Randbereich 2 sind an acht Stellen, die bezogen auf den Mittelpunkt der Anzeigefläche 1 in etwa jeweils um 45° gegeneinander versetzt sind, acht Symbole für die mit einem nicht dargestellten Betätigungsglied anzusteuernden Menüs dargestellt. Es handelt sich dabei um die Menüs Audio, Navigation, Fernsehen (TV), Stand-Klima usw.. "Einstellung" bedeutet, den insgesamt einstellbaren Funktionen bzw. Funktionswerte zugeordnet, "Off" steht für die Möglichkeit, die Bildschirmanzeige auszuschalten.

Durch eine Zusatzbewegung (Taumel- bzw. Parallelbewegung) des Betätigungsglieds (nicht dargestellt) kann einer der acht Menüpunkte ausgewählt werden. Hierzu ist das Betätigungsglied in einer durch einen Pfeil 4 symbolisierten Richtung zu bewegen. Hier wird der Menüpunkt Audio ausgewählt. Diese Auswahl geschieht durch Bewegen des Betätigungsglieds in der durch den Pfeil 4 angegebenen Richtung um eine Strecke bzw. einen Winkel, der ein vorgegebenes Maß übersteigt. Damit ist der Menüpunkt "Audio" ausgewählt.

Nach Loslassen geht das Betätigungsglied unter der Wirkung einer Rückstellkraft wieder in die Ruhelage zurück. Gleichzeitig erscheinen innerhalb der Anzeigefläche 1 die dem Menüpunkt 4 zugeordneten hierarchiemäßig untergeordneten Menüpunkte. Es handelt sich dabei um die innerhalb eines nicht dargestellten Rundfunkgeräts fest programmierten Sendestationen. Diese werden im Mittelbereich angezeigt. Dies ist in Fig. 2 gezeigt. Eines der Symbole, hier "Antenne" ist optisch hervorgehoben. Es handelt sich dabei um das Symbol des Senders, der zuletzt ausgewählt wurde. Nimmt der Fahrzeugbenutzer keine weiteren Einstellungen vor, so bleibt dieser Sender eingestellt.

Möchte er hingegen den Sender ändern, so dreht er hierzu das Betätigungsglied um seine Längsachse. Es handelt sich dabei um einen Dreh-Druck-Knopf, wie er aus der EP 0 366 132 B1 bekannt ist, und auch in der EP 0 796 766 A beschrieben ist. Dabei wird eines der den anderen Sendern zugeordneten Symbole, z. B. Klassik optisch anstelle von Antenne hervorgehoben. Die Umschaltung auf diesen Sender erfolgt, indem der Dreh-Druck-Knopf in Längsrichtung bewegt wird. Unter der Wirkung einer Rückstellfeder geht er anschließend wieder in seine Ausgangslage zurück.

Soll nun auf eine Funktion eines anderen Menüs, beispielsweise des Menüs BC=Bordcomputer umgeschaltet werden, ist hierzu der Dreh-Druck-Knopf in der durch den Pfeil BC angegebenen Richtung zu verschwenken bzw. parallel zu verschieben. Mit dem Verschwenken einher geht die Anzeige der verschiedenen Funktionen des Bordcomputers im Mittelbereich anstelle der in Fig. 2 dargestellten Sendersymbole. Eine Bordcomputer-Funktion, z. B. Reichweite kann standardmäßig oder nach vorbereitender Axialbewegung des Dreh-Druck-Knopfs hervorgehoben sein. Die Auswahl dieser Funktion, d. h. die Anzeige der tatsächlichen Reichweite des Fahrzeugs, kann dann erfolgen, indem der Dreh-Druck-Knopf gegebenenfalls nochmals axial bewegt wird. Im Mittelbereich erscheint beispielsweise neben dem optisch hervorgehobenen Symbol "Reichweite" der Wert der Reichweite, z. B. 225 km.

Unmittelbar danach kann auf das Menü Navigation umgeschaltet werden, indem die Zusatzbewegung des Dreh-Druck-Knopfs in Richtung des Pfeils "Navigation" durchgeführt wird. im Mittelbereich erscheinen die einzelnen Navigationsparameter.

Auf diese Weise ist es möglich, rasch und sicher zwischen den einzelnen Menüs, den Teilmenüs, Funktionen und Funktionswerte umzuschalten.

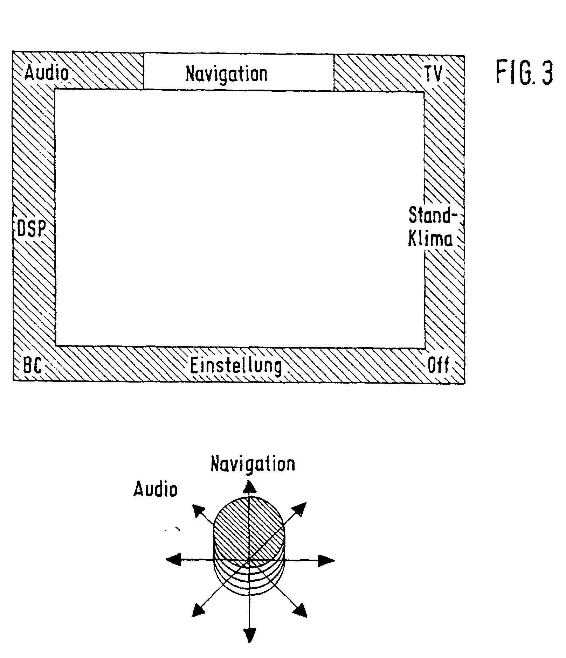

Die anhand von Fig. 3 ff. dargestellte Weiterbildung der Erfindung besteht darin, beim translatorischen Verschieben des Betätigungsglieds nicht sofort einen Funktionswechsel auszulösen, sondern zunächst nur eine Hervorhebung, z. B. ein "highlighting", des gewählten Hauptmenüpunkts vorzunehmen. Dadurch ist zu diesem Zeitpunkt noch eine Korrektur durch den Bedienenden möglich. Die eigentliche Funktionsauslösung erfolgt erst mit dem Loslassen des federzentrierten Betätigungsglieds.

Der Nutzer möchte den Funktionsbereich "Audio" aufrufen. Im Beispiel von Fig.3 wurde statt "Audio" versehentlich der Menüpunkt "Navigation" gewählt. Würde jetzt sofort das zugehörige Untermenü aufgerufen, befände sich der Bediener im Navigationsmenü.

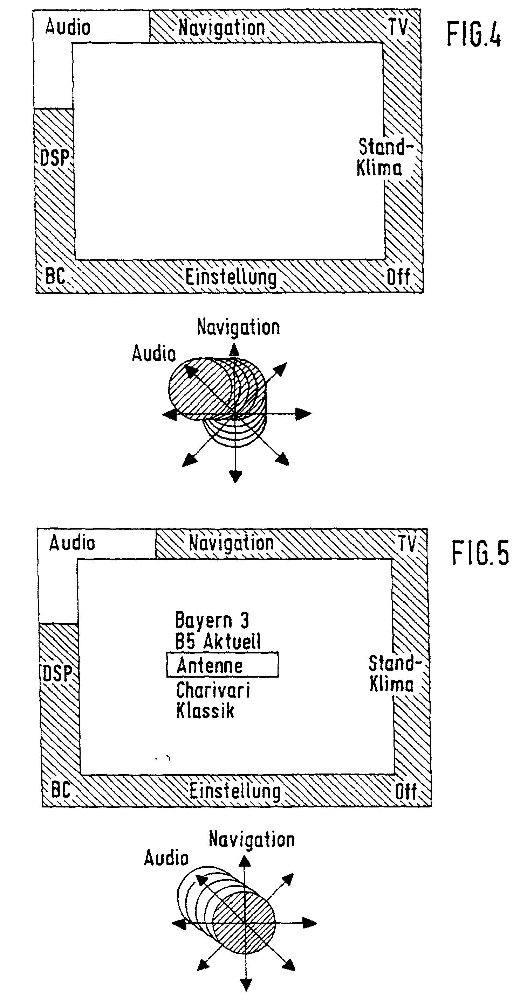

Um dies zu Vermeiden, erfolgt der Aufruf des jeweiligen Untermenüs nicht sofort bei der Auswahl, sondern erst beim Loslassen des Betätigungsglieds. im Beispiel erkennt der Nutzer an der Hervorhebung von "Navigation", daß der falsche Menüpunkt gewählt ist und kann das Betätigungsglied nach links auf den gewünschten Menüpunkt "Audio" schieben. Dies zeigt Fig. 4. Auch jetzt ist die zugehörige Funktion "Menü" Audio noch nicht aktiviert.

Erst durch Loslassen des federzentrierten Betätigungsglieds erfolgt der Aufruf des gewünschten Untermenüs "Audio", wie in Fig. 5 gezeigt. Fig. 5 ist unterscheidet sich gegenüber der in Fig. 2 dargestellten Situation nur unsoweit, als nunmehr die Beschriftung des aktivierten Menus im Rahmen optisch hervorgehoben bleibt.

## Patentansprüche

1. Vorrichtung zur Steuerung einer Bildschirmanzeige (1) mit einem Betätigungsglied, das um eine Längsachse drehbar und in Richtung der Längsachse bewegbar ist und wodurch ein Punkt einer aus Menü, Teilmenüs, Funktion und/oder Funktionswert bestehenden Menüstruktur auswählbar und als optisch hervorgehobenes Feld in der Bildschirmanzeige (1) darstellbar ist, bei der das Betätigungsglied eine Ausgangslage besitzt und demgegenüber eine Zusatzbewegung mit zwei zusätzlichen Freiheitsgraden durchführen kann, **dadurch gekennzeichnet, daß** bei der Zusatzbewegung des Betätigungsglieds ein in einem Randbereich (2) der Bildschirmanzeige (1) angeordnetes und einem Punkt der Menüstruktur zugeordnetes Feld auswählbar ist, und daß mittels der Dreh-/Längsbewegung des Betätigungsglieds ein diesem Feld zugeordnetes, innerhalb der Menüstruktur untergeordnetes Feld in dem vom Randbereich (2) umfaßten Mittelbereich (3) der Bildschirmanzeige (1) auswählbar ist.

2. Vorrichtung nach Anspruch 1, **dadurch gekennzeichnet, daß** das Betätigungsglied eine Taumelbewegung als Zusatzbewegung durchführen kann.

3. Vorrichtung nach Anspruch 1, **dadurch gekennzeichnet, daß** das Betätigungsglied eine Parallelverschiebung als Zusatzbewegung durchführen kann.

4. Vorrichtung nach Anspruch 2 oder 3 , **dadurch gekennzeichnet, daß** das Betätigungsglied für die Zusatzbewegung zwangsgeführt ist.

5. Vorrichtung nach einem der Ansprüche 1 bis 4, **dadurch gekennzeichnet, daß** das Betätigungsglied eine reversible Zusatzbewegung durchführt.

6. Vorrichtung nach Anspruch 5, **dadurch gekennzeichnet, daß** das Betätigungsglied die Zusatzbewegung gegen die Wirkung einer Feder ausführt.

7. Vorrichtung nach einem der Ansprüche 1 bis 6, **dadurch gekennzeichnet, daß** die im Rahmenbereich angeordneten Punkte bei und/oder nach der Zusatzbewegung optisch hergehoben sind und erst dann ausgewählt sind, wenn das Betätigungsglied sich zumindest annähernd wieder in der Ausgangslage befindet.

8. Vorrichtung nach einem der Ansprüche 1 bis 7 **dadurch gekennzeichnet, daß** bei Auswahl des Feldes im Randbereich (2) die zugeordneten auswählbaren Felder im Mittelbereich (3) selbstätig angezeigt sind.

## Claims

1. A device for controlling a screen display (1) comprising an actuating element rotatable around a longitudinal axis and movable in the direction of the longitudinal axis and wherein a point can be selected from a menu structure comprising a menu, component menus, function and/or function value and can be shown in the form of an optically highlighted area on the screen display (1), wherein the actuating element has a starting position relative to which it can make an additional movement with two additional degrees of freedom, **characterised in that** during the additional movement of the actuating element an area disposed in an edge region (2) of the screen display (1) and associated with a point on the menu structure is selectable and by means of the rotary and longitudinal movement of the actuating element a subordinate area associated with the first-mentioned area inside the menu structure can be selected in the central region (3) of the screen display (1) surrounded by the edge region (2).

2. A device according to claim 1, **characterised in that** the actuating element can perform an additional movement by wobbling.

3. A device according to claim 1, **characterised in that** the actuating element can perform an additional movement by parallel displacement.

4. A device according to claim 2 or 3, **characterised in that** the actuating element is automatically guided for the additional movement.

5. A device according to any of claims 1 to 4, **characterised in that** the actuating element makes a reversible additional movement.

6. A device according to claim 5, **characterised in that** the actuating element makes the additional movement against the action of a spring.

7. A device according to any of claims 1 to 6, **characterised in that** the points situated in the frame region are optically highlighted during and/or after the additional movement and are selected only when the actuating element is at least approximately back in the starting position.

8. A device according to any of claims 1 to 7, **characterised in that** when the area in the edge region (2) is selected, the associated selectable areas in the central region (3) are automatically displayed.

## Revendications

1. Dispositif de commande d'un affichage d'écran (1) à l'aide d'un élément d'actionnement mobile en rotation autour de son axe longitudinal et dans la direction de l'axe longitudinal, permettant de sélectionner ainsi un point d'une structure de menu composée de menus, de menus partiels, de fonctions et/ou de valeurs de fonctions et de les représenter sur l'écran d'affichage (1) sous la forme d'un champ surligné optiquement,
l'élément d'actionnement possédant une position de repos et pouvant exécuter par rapport à celle-ci un mouvement complémentaire avec deux degrés de liberté,
**caractérisé en ce que**
par le mouvement complémentaire de l'élément d'actionnement on peut sélectionner un champ prévu dans une zone marginale (2) de l'écran d'affichage (1) et associé à un point de la structure de menu, et
à l'aide du mouvement de rotation/mouvement longitudinal de l'élément d'actionnement, on sélectionne un champ associé à ce champ et de hiérarchie inférieure dans la structure du menu, dans la zone centrale (3) entourée par la zone marginale (2) de l'écran d'affichage (1).

2. Dispositif selon la revendication 1,
**caractérisé en ce que**
l'élément d'actionnement peut effectuer un mouvement de nutation comme mouvement complémentaire.

3. Dispositif selon la revendication 1,
**caractérisé en ce que**
l'élément d'actionnement peut effectuer un déplacement parallèle comme mouvement complémentaire.

4. Dispositif selon l'une quelconque des revendications 2 ou 3,
**caractérisé en ce que**
l'élément d'actionnement est guidé de force pour le mouvement complémentaire.

5. Dispositif selon l'une quelconque des revendications 1 à 4,
**caractérisé en ce que**
l'élément d'actionnement peut effectuer un mouvement complémentaire réversible.

6. Dispositif selon la revendication 5,
**caractérisé en ce que**
l'élément d'actionnement effectue le mouvement complémentaire contre l'action d'un ressort.

7. Dispositif selon l'une quelconque des revendications 1 à 6,
**caractérisé en ce que**
les points prévus dans la zone marginale sont surlignés optiquement pendant ou après le mouvement complémentaire et ne sont sélectionnés que lorsque l'élément d'actionnement se trouve au moins approximativement de nouveau dans sa position de repos.

8. Dispositif selon l'une quelconque des revendications 1 à 7,
**caractérisé en ce que**
lorsqu'un champ est sélectionné dans la zone marginale (2), les champs associés susceptibles d'être sélectionnés sont affichés automatiquement dans la zone centrale (3).
